(19) Europäisches Patentamt

**European Patent Office**

**Office européen des brevets**

(11) Veröffentlichungsnummer: **0 262 083 B1**

# (12) EUROPÄISCHE PATENTSCHRIFT

(45) Veröffentlichungstag der Patentschrift: **24.06.92**

(21) Anmeldenummer: **87730097.0**

(22) Anmeldetag: **18.08.87**

(51) Int. Cl.⁵: **C10L 5/40**

(54) **Verfahren zur Herstellung eines festen Brennstoffs.**

(30) Priorität: **02.09.86 DE 3630248**

(43) Veröffentlichungstag der Anmeldung:
**30.03.88 Patentblatt 88/13**

(45) Bekanntmachung des Hinweises auf die
Patenterteilung:
**24.06.92 Patentblatt 92/26**

(84) Benannte Vertragsstaaten:
**AT CH ES FR GB LI SE**

(56) Entgegenhaltungen:
**EP-A- 0 189 327      WO-A-79/00988**
**AT-A- 374 490       BE-A- 655 843**
**FR-A- 2 601 380     US-A- 3 227 530**
**US-A- 3 947 255**

**Chemie-Ing.-Techn. 36 Jahrg., Nr.3 Seiten
175 - 185**

(73) Patentinhaber: **BIO-HEIZSTOFFWERK BERLIN
GMBH**
**Mariendorfer Damm 49**
**W-1000 Berlin 42(DE)**

(72) Erfinder: **Jäckel-Chatelain, Heinz-Dieter**
**Albrechtstrasse 107**
**W-1000 Berlin 42(DE)**

(74) Vertreter: **Pfenning, Meinig & Partner**
**Kurfürstendamm 170**
**W-1000 Berlin 15(DE)**

## Beschreibung

Die Erfindung betrifft ein Verfahren gemäß dem Oberbegriff des Anspruchs 1.

Aus der US-A-3 947 255 ist ein Verfahren zur Herstellung eines 60 bis 95 Gewichtsprozent Rinde und 2,5 bis 40 Gewichtsprozent thermoplastischen Kunststoff enthaltenden Brennstoffs bekannt. Diese Materialien werden gemischt und einem Extruder zugeführt. Die Mischung wird im Extruder erwärmt, derart, daß der thermoplastische Kunststoff schmilzt, die Rinde jedoch nicht verkohlt. Der geschmolzene Kunststoff verteilt sich zwischen der Rinde und dient als Bindemittel für diese. Die Mischung wird mittels einer Schnecke durch den Extruder hindurch und aus diesem heraus befördert, wobei ein hoher Druck auftritt und eine innige Vermischung stattfindet. Am Ausgang des Extruders wird die Mischung gekühlt, so daß sie sich verfestigt und in Form von Preßlingen ausgegeben wird. Dieses Verfahren hat jedoch den Nachteil, daß die Mischung im Extruder besonders erwärmt werden muß und daß die erhaltenen Brennstoff-Preßlinge noch eine relativ hohe Restfeuchte sowie eine relativ geringe Dichte haben.

In der Zeitschrift "Chemie-Ing.-Techn. 36. Jahrg. 1964, No. 3, Seiten 175-185 wird die Verwendung von Mehrwellen-Schnecken in der Verfahrenstechnik beschrieben. Hierbei wird erwähnt, daß die für Mischvorgänge gut brauchbaren Einwellen-Schnecken bei der Verarbeitung vieler Produkte der Gefahr ausgesetzt seien, daß Teile dieser Produkte auf der Schneckenoberfläche ankleben oder ankrusten können, wodurch sich der Querschnitt des Apparates verengt oder sogar ganz verstopft. Aus diesem Grunde wurden Mehrwellen-Schnecken entwickelt, deren Elemente, vollständig ineinander eingreifend und sich abschabend, ein System mit konstant bleibendem Querschnitt bilden. Als weiterer Grund für den Bau von Mehrwellen-Maschinen wird die Möglichkeit genannt, durch spezielle Konstruktionselemente besonders nützliche Knetkräfte auf das Produkt einwirken zu lassen.

Ausgehend von dem Stand der Technik nach der US-A-3 947 255 ist es die Aufgabe der vorliegenden Erfindung, ein vereinfachtes Verfahren zur Herstellung eines festen Brennstoffs aus industriellen Produktionsrückständen aus zellulosehaltigem Material und Polyethylen, die gegebenenfalls zerkleinert, miteinander vermischt und zu einem Körper gewünschter Form verpreßt werden, wobei das Verpressen in einer Schneckenpresse unter ständiger Bewegung des Materials und unter einem solchen Druck erfolgt, daß das im Material enthaltene Wasser weitgehend verdampft, anzugeben, bei dem der erhaltene Brennstoff eine verringerte Restfeuchte und damit einen erhöhten Heizwert sowie eine für den Transport und die Lagerung vorteilhafte hohe Dichte aufweist.

Diese Aufgabe wird erfindungsgemäß gelöst durch das im kennzeichnenden Teil des Anspruchs 1 angegebene Merkmal. Eine vorteilhafte Weiterbildung des erfindungsgemäßen Verfahrens ergibt sich aus Anspruch 2.

Die Erfindung wird im folgenden anhand eines in den Figuren dargestellten Ausführungsbeispiels näher erläutert. Es zeigen:

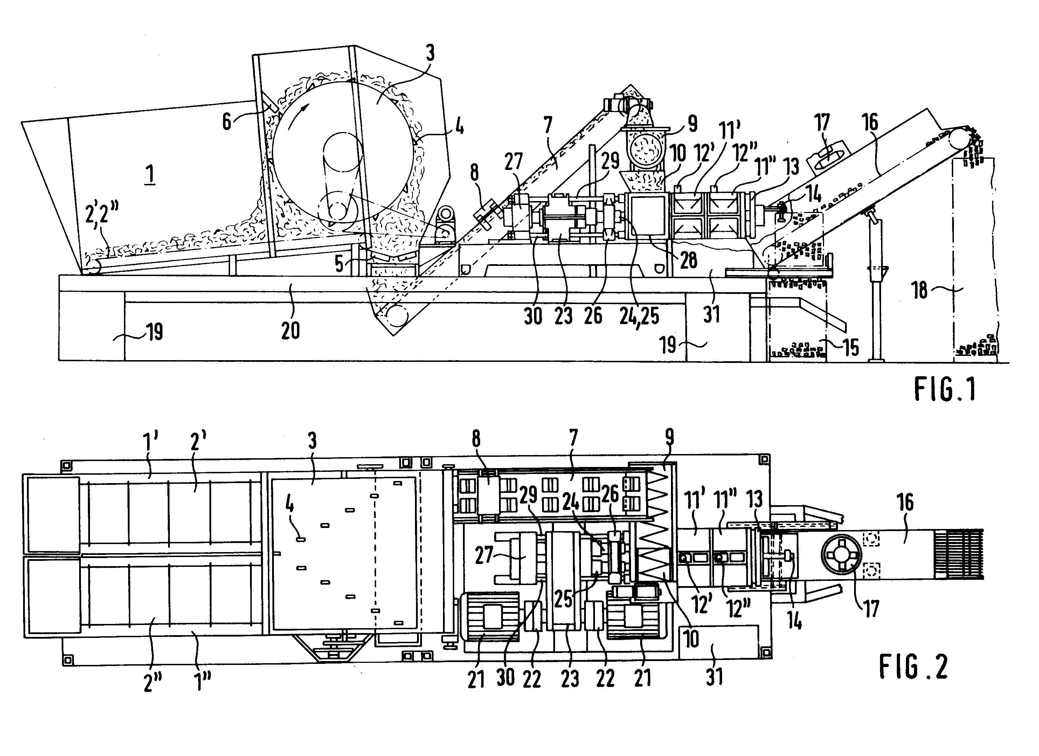

Fig. 1 in der Seitenansicht eine schematische Darstellung einer Vorrichtung zur Herstellung von festem Brennstoff in Form von Briketts, und

Fig. 2 die Draufsicht auf die Vorrichtung nach Fig. 1.

In einem in zwei getrennte Behälter 1' und 1" unterteilten Zuführbunker 1 werden die Ausgangsmaterialien für den herzustellenden Brennstoff gelagert. Im Behälter 1' befinden sich beispielsweise die relativ feuchten und im Behälter 1" die relativ trockenen Ausgangsmaterialien. Als feuchtes Ausgangsmaterial dient insbesondere Holz, das in jeder beliebigen Form und jedem beliebigen Zustand verarbeitet werden kann. Relativ trockene Ausgangsmaterialien sind beispielsweise Papier und Polyethylen. Der Boden jedes der Behälter 1' und 1" wird durch einen umlaufenden Transportrost 2' bzw. 2" gebildet. Die Transportroste 2', 2" befördern das in dem jeweils zugeordneten Behälter 1', 1" gelagerte Material zu einer gemeinsamen Dosiertrommel 3. Der Vorschub der beiden Transportroste 2' und 2" wird jeweils separat im Intervallbetrieb gesteuert, so daß die Zuführung der in den beiden Behältern 1' und 1" befindlichen Materialien zur Dosiertrommel in gewünschter Weise erfolgen kann. Die Steuerung kann in Abhängigkeit von beliebigen Kriterien vorgenommen werden; beispielsweise kann hierdurch ein gewünschter Gesamtfeuchtigkeitsgrad aller Ausgangsmaterialien eingestellt werden. Dieser Gesamtfeuchtigkeitsgrad kann bei der beschriebenen Vorrichtung bis zu 55 % betragen.

Die Dosiertrommel besitzt auf der Außenseite zahnförmige Vorsprünge 4, die bei einer Drehung der Trommel in der angezeigten Pfeilrichtung das aus den Behältern 1' und 1" zugeführte Material mitnehmen, bis dieses auf ein Querband 5 fällt. Durch entsprechende Steuerung des Antriebs der Dosiertrommel 3 wird die gewünschte Menge des zu verpressenden Materials eingestellt. Ein gegenüber der Dosiertrommel 3 angeordneter Anschlag 6 bildet einen in Axialrichtung der Trommel verlaufenden Schlitz zwischen sich und der Dosiertrommel 3, so daß stückiges Ausgangsmaterial nur dann zum Querband 5 gelangt, wenn es diesen Schlitz passieren kann. Größere Stücke des Ausgangsmaterials, beispielsweise Holzkisten oder dergleichen, werden durch das Zusammenwirken von Dosiertrommel 3 und Anschlag 6 soweit zerkleinert, daß sie durch den Schlitz hindurchgelangen können. Die Dosiertrommel besitzt somit neben der Dosierfunktion auch eine Vorzerkleinerungswirkung. Wenn das Ausgangsmaterial zu Ballen verpreßt ist, dann werden diese ebenfalls durch das Zusammenwirken von Dosiertrommel 3 und Anschlag 6 zerkleinert.

Das auf das Querband 5 gelangte Material wird von diesem zu einem Steigband 7 befördert, auf dem es zur Aussonderung von metallischen Teilen an einem Aushebemagnet 8 vorbeigeführt wird. Vom oberen Ende des Steigbandes 7 fällt das Material auf eine Beschickungsschnecke 9, die einerseits zur optimalen Beschickung der nachfolgenden Preßvorrichtung und andererseits als Materialpuffereinheit dient. Von dieser wird es über einen Trichter 10 befördert, der den Eingang der Preßvorrichtung darstellt und in den das Material hineinfällt. Im Bereich des Trichters 10 angeordnete Niveaukontrollsonden sind zur Erzeugung von Steuersignalen für den Antrieb der vorgenannten Fördereinrichtungen vorgesehen. Die Materialien gelangen bereits in erheblichem Maße miteinander vermischt in den Trichter 10, da jeder Transport des Materials auch eine gewisse Mischwirkung besitzt.

Die Preßvorrichtung besteht aus mehreren, im vorliegenden Fall zwei hintereinander angeordneten Preßelementen 11' und 11''. Die Anzahl der hintereinander anzuordnenden Preßelemente ist nach Bedarf veränderbar. Sie richtet sich insbesondere nach dem Gesamtfeuchtigkeitsgrad der Ausgangsmaterialien, wenn für den fertigverpreßten Brennstoff eine bestimmte Restfeuchte, beispielsweise 4 % vorgegeben ist. Jedes Preßelement besitzt zwei ineinandergreifende parallele Schnecken, wobei die Preßelemente derart zusammengesetzt sind, daß die zugeordneten Schneckenelemente insgesamt zwei durchgehende parallele ineinandergreifende Schnecken bilden. In der Preßvorrichtung wird das eingegebene Material durch die umlaufenden Schnecken innig vermischt und mit einem Druck bis maximal 1800 kg/cm$^2$ verpreßt. Durch die Reibung der Materialteilchen sowie durch die Verdichtung erwärmt sich das Material derart, daß der größte Teil des in ihm enthaltenen Wassers verdampft. Jedes der Preßelemente 11', 11'' ist mit einem Gasauslaß 12' bzw. 12'' versehen, über die der erzeugte Wasserdampf abgeführt wird. Die in dem Wasserdampf enthaltene Wärme kann gegebenenfalls zu Heizzwecken genutzt werden. Die nahezu vollständige Entfeuchtung auch stark wasserhaltigen Materials wird somit allein durch mechanische Bewegung und durch Druckeinwirkung erreicht.

An der Ausgangsseite der Preßvorrichtung ist ein Formkopf 13 befestigt, durch den dem austretenden verpreßten Material eine gewünschte Form gegeben wird. Im vorlie genden Ausführungsbeispiel sollen dies Briketts sein, jedoch sind auch beliebige andere Formen und Größen der hergestellten Brennstoffkörper möglich. Die Briketts werden von einem Austragwerkzeug 14 ausgegeben, wobei sie entweder direkt in einen strichpunktiert dargestellten Behälter 15 oder auf ein Transportband 16 fallen. Über diesem Transportband befindet sich ein Ventilator 17, durch den eine Kühlung der erhitzten Briketts erfolgt, bevor sie vom oberen Ende des Transportbandes 16 in einen Behälter 18 fallen.

Die gesamte Vorrichtung wird von einem Sockel getragen, der aus Füßen 19 und einer darüber angeordneten Platte 20 besteht. Zum Antrieb der Schnecken der Preßvorrichtung dienen zwei Motoren 21, die jeweils über eine Kupplung 22 mit einem Getriebe 23 verbindbar sind. Die am Materialeintrittsende der Preßvorrichtung aus dieser heraustretenden Schneckenenden 24, 25 werden durch einen Spreizdruckaufnehmer 26 und das Getriebe 23 hindurchgeführt und sind in einem Axiallager 27 gelagert. Am Gehäuse 28 der Preßvorrichtung befestigte Zugstangen 29,30 leiten auf das Axiallager 27 ausgeübte Kräfte auf das Gehäuse 28 ab. Der Spreizdruckaufnehmer 26 ist lose auf den Zugstangen 29, 30 geführt. Ein Steuerschrank 31 enthält alle zur Steuerung des bestimmungsgemäßen Betriebs der Vorrichtung erforderlichen elektronischen und elektrischen Schaltungselemente.

**Patentansprüche**

1. Verfahren zur Herstellung eines festen Brennstoffs aus industriellen Produktionsrückständen aus zellulosehaltigem Material und Polyethylen, die gegebenenfalls zerkleinert, miteinander vermischt und zu einem Körper gewünschter Form verpreßt werden, wobei das Verpressen in einer Schneckenpresse unter ständiger Bewegung des Materials und unter einem solchen Druck erfolgt, daß das im Material enthaltene Wasser weitgehend verdampft,
   **dadurch gekennzeichnet,**
   daß eine Schneckenpresse mit zwei ineinandergreifenden parallelen Schnecken verwendet wird.

2. Verfahren nach Anspruch 1, dadurch gekennzeichnet, daß Schnecken mit stufenweise veränderbarer Länge verwendet werden.

**Claims**

1. Process for the manufacture of solid fuel from industrial production waste of cellulose-containing material and polyethylene, which, if appropriate, is reduced, mixed and compressed into a body of a chosen shape, in which respect the compression is carried out in a worm-gear press whilst continuously moving the material and under such pressure that water contained in the material substantially evaporates, **characterised in that** a worm-gear press having two interengaging parallel worm gears is used.

2. Process according to claim 1, **characterised by the** use of worm gears the length of which is changeable in steps.

**Revendications**

1. Procédé pour la fabrication d'un combustible solide à partir de résidus de fabrication industrielle constitués de matières cellulosiques et de polyéthylène qui sont éventuellement broyées, mélangées et comprimées pour constituer un corps de forme souhaitée, la compression s'effectuant dans une presse à vis sans fin avec mouvement constant de la matière et sous une pression telle que l'eau contenue dans la matière est extraite dans une large mesure, caractérisé par le fait que la presse à vis sans fin utilisée comporte deux vis sans fin parallèles mutuellement en prise.

2. Procédé selon la revendication 1, caractérisé par le fait que la longueur des vis sans fin utilisées peut être modifiée par paliers.

FIG.1

FIG.2